# EUROPÄISCHE PATENTSCHRIFT

(11) **EP 2 897 753 B1**
(45) Veröffentlichungstag und Bekanntmachung des Hinweises auf die Patenterteilung: **05.06.2019**
(21) Anmeldenummer: 13805230.3
(22) Anmeldetag: 12.09.2013
(51) Int. Cl.: B23D 77/00

(54) **DREHANTREIBBARES ZERSPANUNGSWERKZEUG**
CUTTING TOOL WHICH IS DRIVABLE IN ROTATION
OUTIL DE COUPE ENTRAÎNABLE EN ROTATION

(30) Priorität: 18.09.2012 DE 102012216655
(43) Veröffentlichungstag der Anmeldung: 29.07.2015
(73) Patentinhaber: Gühring Kg, 72458 Albstadt (DE)
(72) Erfinder: KLEINER, Gilbert, 72514 Inzigkofen (DE)
(74) Vertreter: Spachmann, Holger
(86) Internationale Anmeldenummer: PCT/DE2013/000517
(87) Internationale Veröffentlichungsnummer: WO 2014/044238

(56) Entgegenhaltungen:
- WO-A1-2007/085281
- DE-A1-102010 046 044
- DE-U1-202007 015 595
- JP-A- 2004 237 401
- JP-U- 3 016 266

## Beschreibung

Die vorliegende Erfindung betrifft ein Zerspanungswerkzeug, insbesondere ein drehantreibbares Zerspanungswerkzeug gemäß dem Oberbegriff des Patentanspruchs 1 mit einer Kühl- und Schmiermittelversorgung.

Derartige Zerspanungswerkzeuge sind im Stand der Technik bekannt. Beispielsweise offenbart die DE 10 2010 046 044 A1, die als nächstkommender Stand der Technik angesehen wird, eine Reibahle als ein drehantreibbares Zerspanungswerkzeug nach dem Oberbegriff des Anspruchs 1. Diese Reibahle weist einen axial zentrisch verlaufenden Kühl-/Schmiermittelversorgungskanal sowie mindestens eine Schneide am Umfang auf. Der axial zentrisch verlaufende Kühl-/Schmiermittelversorgungskanal wird mit einer Kühlmittelschraube verschlossen. Die Kühlmittelschraube weist zwei abgeflachte Bereiche am Schraubenschaft auf, an denen vorbei das Kühl-/Schmiermittel zum stirnseitigen Ende der Reibahle fließen kann. An der Stirnseite der Reibahle ist mindestens eine (radial verlaufende) Nut, üblicherweise jedoch mehrere Nuten, die zu den entsprechenden Schneiden führen, in die Reibahle eingefräst. Der am stirnseitigen Ende der Reibahle sitzende Schraubenkopf dient als Abdeckung, die mit der Nut einen radial verlaufenden Kanal bildet, der das Kühl-/Schmiermittel aus dem axial zentrisch verlaufenden Kühl-/ Schmiermittelversorgungskanal umlenkt. Über den radial verlaufenden Kühl-/Schmiermittelkanal soll Kühl-/Schmiermittel in der Nähe der Schneide(n) auf den Umfang der Reibahle aufgebracht werden und somit die Schneide(n) sowie das Werkstück kühlen und schmieren.

Wie bei Simulationen und Versuchen festgestellt wurde, ergibt sich jedoch bei der Anordnung nach diesem Stand der Technik das Problem, dass das Kühl-/Schmiermittel nicht ausreichend gleichmäßig über den gesamten Umfang verteilt aufgebracht wird. Im Extremfall könnte dies dazu führen, dass einige Schneiden des Zerspanungswerkzeugs gar nicht, andere dagegen zu stark gekühlt werden. Das führt einerseits zu einem erhöhten Verschleiß der Werkzeuge, andererseits kann insbesondere bei hochgenauer Bearbeitung auch die thermische Ausdehnung von Werkzeug und Werkstück schlechter beherrscht werden, so dass sich die Fertigungstoleranzen erhöhen.

Daher ist es die Aufgabe der Erfindung, den Stand der Technik dahingehend zu verbessern, dass eine gleichmäßige Kühlung des Werkstücks erreicht wird.

Diese Aufgabe wird mit einem Zerspanungswerkzeug nach Anspruch 1 gelöst. Vorteilhafte Weiterbildungen sind Gegenstand der Unteransprüche.

Erfindungsgemäß wird ein Zerspanungswerkzeug, im Besonderen eine Reibahle, mit einer Verteilerschraube geschaffen, die in Strömungsrichtung des Kühl- und/oder Schmiermittels im Bereich zwischen Gewindestegen und dem Kopf einen Strömungsabschnitt mit einem im Durchmesser verringerten Querschnitt aufweist, der mit einer Axialbohrung im Schneidteil des Werkzeugs einen sich axial erstreckenden Ringraum rund um den Strömungsabschnitt bildet.

In diesem Ringraum kann sich das durch Axialnuten zwischen den Gewindestegen einströmende Kühl-/Schmiermittel verteilen und gleichmäßig auf allen Seiten des Zerspanungswerkzeugs abfließen. Dadurch wird selbst bei einem kleineren Durchgang für Kühl-/ Schmiermittel als im Stand der Technik durch die Axialnuten entlang der Kühlmittelschraube das Kühl-/Schmiermittel im Strömungsabschnitt ausreichend verteilt, so dass über 360° am gesamten Umfang ausreichend Kühl-/Schmiermittel zur Verfügung steht. Optimalerweise werden mehrere Axialnuten im Gewinde zwischen der Verteilerschraube und dem Zerspanungswerkzeug gebildet. In einer nicht erfindungsgemäßen Ausführungsform kann aufgrund der besseren Verteilung des Kühl-/Schmiermittels im Ringraum jedoch prinzipiell selbst durch eine einzige Axialnut oder einen vergleichbaren Durchbruch mit geringer Querschnittsfläche, beispielsweise eine Abflachung eines Außengewindes einer Verteilerschraube zwischen dem axial zentrisch verlaufenden Kühl-/Schmiermittelversorgungskanal und dem Ringraum eine ausreichend homogene Verteilung des Kühl-/Schmiermittels an alle Schneiden erfolgen.

Entscheidend ist lediglich die Möglichkeit, Kühl-/Schmiermittel aus dem Kühl-/Schmiermittelversorgungskanal an der Befestigung (den "Gewindestegen") der Verteilerschraube vorbei in den Ringraum zu leiten und es dort in radialer Richtung entlang der Stirnseite des Zerspanungswerkzeugs umzuleiten und durch einen Spalt zwischen der Verteilerschraube und der Stirnseite des Zerspanungswerkzeugs austreten zu lassen.

Neben dem Vorteil der gleichmäßigen Verteilung des Kühl-/Schmiermittels hat die Erfindung auch den erfindungsgemäßen Vorteil, dass keine zusätzlichen radialen Nuten in die Stirnseite des Zerspanungswerkzeugs eingefräst sind.

Auch die Unterseite des Schraubenkopfs kann herkömmlich flach ausgebildet sein, ohne Nuten aufzuweisen.

Gemäß der Erfindung ist der Ringraum zylindrisch. Ein zylindrischer Ringraum ist einfach dadurch zu fertigen, dass die Verteilerschraube einen Schaft aufweist, der ähnlich wie bei einer Dehnschraube einen geringeren Durchmesser als den Gewindenenndurchmesser der Verteilerschraube aufweist und/oder das stirnseitige Ende des Kühl-/Schmiermittelversorgungskanals einen größeren Durchmesser als den Gewindenenndurchmesser der Verteilerschraube aufweist. Entsprechend kann dann, wenn keine Schraubverbindung verwendet wird, der zylindrische Ringraum durch eine Bohrung im Zerspanungswerkzeug, die den Kühl-/Schmiermittelversorgungskanal bildet und einen Schaft der Verteilerschraube zwischen dem Sitz der Verteilerschraube im Kühl-/Schmiermittelversorgungskanal und dem Kopf der Verteilerschraube gebildet werden. Das einfache Bohren im Zerspanungswerkzeug und das Abdrehen des Schafts der Verteilerschraube stellen fertigungstechnisch nur sehr geringe Anforderungen und können vergleichsweise kostengünstig mit hoher Genauigkeit ausgeführt werden.

Nach einer weiteren bevorzugten Ausführungsform verjüngt sich der Ringraum in Strömungsrichtung. Wenn das Kühl-/Schmiermittel durch den axial verlaufenden Kühl-/ Schmiermittelversorgungskanal und die Axialnuten in den Ringraum eintritt, wird es beim Eintritt in einen sich in Strömungsrichtung verjüngenden Ringraum leicht entspannt und bei der weiteren Bewegung durch den Ringraum wieder beschleunigt und dadurch im Strömungsabschnitt gleichmäßiger verteilt. Am Austritt aus dem Strömungsabschnitt und bei der Umlenkung durch den Kopf der Verteilerschraube ist der zur Verfügung gestellte Spalt am geringsten und somit die Strömungsgeschwindigkeit am höchsten. Dadurch wird das Kühl-/Schmiermittel optimal hin zum Umfang des Zerspanungswerkzeugs und somit zu den Schneiden des Schneidteils gefördert. Die Verjüngung kann beispielsweise 1° bis 5°, vorzugsweise 3° gegen die Axialrichtung des Schneidteils betragen.

Vorzugsweise ist der Verteiler derart im Kühl-/Schmiermittelversorgungskanal befestigt, dass der Verteilerkopf einen vorab festgelegten Abstand vom stirnseitigen Ende des Kühl-/Schmiermittelversorgungskanals aufweist. Auf diese Weise ist der Austrittsspalt für das Kühl-/Schmiermittel fest eingestellt. Die Festlegung des Abstands kann beispielsweise über einen Anschlag erfolgen, an den die eingeschraubte Verteilerschraube anschlägt. Ein derartiger Anschlag kann im Prinzip auch veränderlich gestaltet werden, um beispielsweise unterschiedlich dichte Kühl-/Schmiermittel optimal einsetzen zu können; bevorzugt wird jedoch ein feststehender Anschlag, wobei die Dicke des Austrittsspalts über die Länge der Verteilerschraube eingestellt werden kann.

Besonders bevorzugt weist die Verteilerschraube auf der kopffernen Seite einen Außenkonus auf, der sich zur Zentrierung und Festlegung der axialen Lage der Verteilerschraube relativ zum Schneidteil an einem in Strömungsrichtung des Kühl-/Schmiermittels vor der Gewindebohrung ausgebildeten Innenkonus abstützt. Dieser Innenkonus dient dann als Anschlag. Diese Ausführungsform bietet den Vorteil, dass zwei Konen (Innen- und Außenkonus) selbst bei vorhandenen Fertigungstoleranzen, beispielsweise unterschiedlichen Konuswinkeln, eine Linien- oder Flächenberührung über den gesamten Umfang erzielen. Dadurch wird ein Verkippen der eingeschraubten Verteilerschraube im Schneidteil verhindert, so dass der Austrittsspalt überall gleich groß ist. Dadurch kann verhindert werden, dass Kühl-/Schmiermittel in verschiedenen Richtungen ungleich stark austritt. Somit werden alle Schneiden des Zerspanungswerkzeugs gleichmäßig gekühlt.

Weiter bevorzugt liegt die Strömungsfläche an der Rückseite des Kopfs in einem definierten axialen Abstand zur Stirnseite des Schneidteils. Obwohl es auch möglich ist, wie im vorstehend erörterten nächstkommenden Stand der Technik zusätzliche Nuten in die Unterseite des Schraubenkopfs einzubringen, ist dies nicht notwendig, wenn stattdessen rundum ein definierter Abstand bzw. Austrittsspalt zwischen der Rückseite des Schraubenkopfs und der Stirnseite des Zerspanungswerkzeugs vorhanden ist. Der genannte Austrittsspalt kann rundum gleichförmig gestaltet werden und die Stirnseite des Zerspanungswerkzeugs schirmförmig oder pilzförmig überdecken. Zudem muss der Austrittsspalt nicht so geformt sein, dass die Unterseite der Verteilerschraube parallel zur Stirnfläche des Zerspanungswerkzeugs verläuft, sondern sie kann sich auch zu dieser hin oder von dieser weg neigen, so dass der Austrittsspalt nicht nur durch den definierten axialen Abstand zwischen diesen Flächen, sondern auch durch die Neigung der Flächen zueinander den Austritt des Kühl-/Schmiermittels hin zu den Schneiden beeinflusst. Beispielsweise kann eine Erweiterung zu einer erhöhten Beschleunigung des Kühl-/Schmiermittels führen, das dann (abgesehen von der Umlenkung am Verteilerkopf) in der Art einer Lavaldüse geführt wird. Laufen die Unterseite des Verteilerkopfs und die Stirnfläche des Zerspanungswerkzeugs aufeinander zu, kann dies strömungstechnisch wie eine Verlängerung des vorstehend erörterten sich verjüngenden Ringraums wirken. Bei der beschriebenen gleichförmigen Gestaltung ergeben sich einfacher zu fertigende glatte Flächen an der Verteilerschraube und am Zerspanungswerkzeug, und zusätzlich wird eine gleichmäßigere Verteilung des Kühl-/Schmiermittels erreicht.

Falls jedoch aus bestimmten Gründen eine verstärkte Lenkung des Kühl-/Schmiermittelstroms erreicht werden soll, ist es auch möglich, stattdessen zwischen Verteilerschraube und Stirnfläche des Schneidteils ähnlich zum bekannten Stand der Technik Nuten vorzusehen, die auf der Rückseite des Verteilerkopfs vorgesehen sein können. Auch in diesem Fall wird durch den erfindungsgemäß vorgesehenen den Nuten "vorgeschalteten" Ringraum erreicht, dass auch mit einer geringen Anzahl von Axialnuten sämtliche Schneiden gleichmäßig mit Kühl-/Schmiermittel versorgt werden. Dadurch werden die eingangs erwähnten Nachteile des Stands der Technik wirksam vermieden.

Besonders bevorzugt umfasst der Verteilerkopf einen Schraubenantrieb, beispielsweise einen Innen- oder Außensechskant. Falls - wie in den nachstehenden Ausführungsformen beschrieben - der Verteilerkopf in das Schneidteil eingeschraubt wird, ist es notwendig, einen Schraubenantrieb am Verteilerkopf vorzusehen.

Die Erfindung wird nachstehend anhand von Ausführungsformen unter Bezugnahme auf die beiliegenden Figuren erläutert. In den Figuren zeigen:
Figur 1 eine isometrische Ansicht einer Reibahle als ein Beispiel eines Zerspanungswerkzeugs aus dem Stand der Technik;
Figur 2 einen Schnitt durch die Reibahle nach Figur 1;
Figur 3 eine Draufsicht auf eine Kühlmittelschraube nach dem Stand der Technik;
Figur 4 und 5 zwei senkrecht zueinander liegende Schnitte der Schraube nach Figur 3;
Figur 6 eine isometrische Ansicht einer Verteilerschraube;
Figur 7 einen stirnseitigen Ausschnitt eines Zerspanungswerkzeugs nach einer bevorzugten Ausführungsform der Erfindung, in das die Verteilerschraube nach Figur 6 einschraubbar ist;
Figur 8 eine Draufsicht auf die Verteilerschraube nach der bevorzugten Ausführungsform der Erfindung;
Figur 9 eine Seitenansicht der Verteilerschraube nach der bevorzugten Ausführungsform der Erfindung;
Figur 10 einen Schnitt C-C durch die in Figur 8 und 9 gezeigte Verteilerschraube;
Figur 11 einen Schnitt D-D durch die in Figur 8 und 9 gezeigte Verteilerschraube;
Figur 12 eine Draufsicht auf den Schraubenantrieb der Verteilerschraube nach der bevorzugten Ausführungsform der Erfindung, in anderen Worten eine Draufsicht auf die Verteilerschraube von der Seite, die der Draufsicht aus Figur 8 gegenüberliegt;
Figur 13 eine schematische Seitenansicht eines erfindungsgemäßen Zerspanungswerkzeug (ohne ersichtliche Schneiden); und
Figur 14 ein Detail der in Figur 6 gezeigten Verteilerschraube.

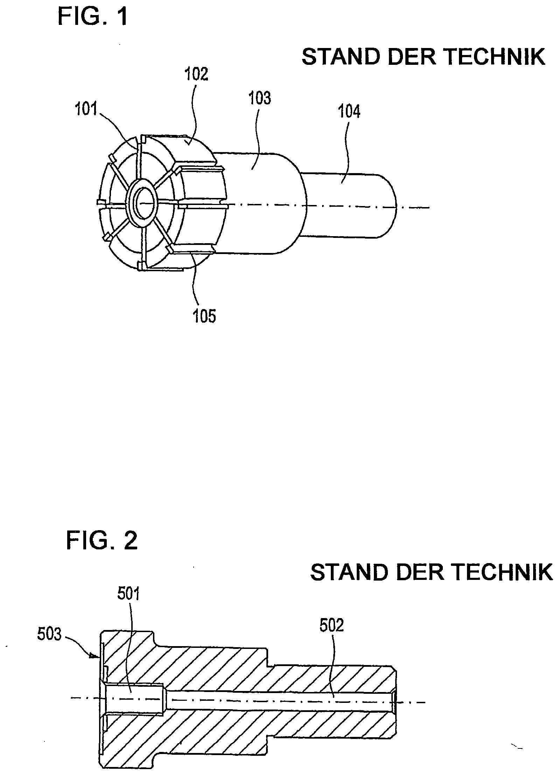

Figur 1 zeigt eine Ansicht einer Reibahle als ein Beispiel eines Zerspanungswerkzeugs aus dem Stand der Technik in isometrischer Projektion. Gut zu erkennen sind dabei die Nuten 101, die Freiflächen 102, die zum Abführen von Spänen und überschüssigem Kühl-/Schmiermittel (im Folgenden auch kurz "Kühlmittel" genannt) dienen, und die Schneiden 105. An den Schaftabschnitten 103, 104 kann die Reibahle in einem Werkzeugfutter aufgenommen werden.

Figur 2 zeigt einen Schnitt durch die Reibahle nach Figur 1. Von rechts nach links fließt Kühlmittel durch den axial verlaufenden Kühl-/Schmiermittelversorgungskanal 502 in den Kühlkanal 501 mit großem Durchmesser und einem Gewinde, in das eine Kühlmittelschraube eingeschraubt werden kann. Gut zu erkennen ist die Nut 503, die der Nut 101 der Figur 1 entspricht.

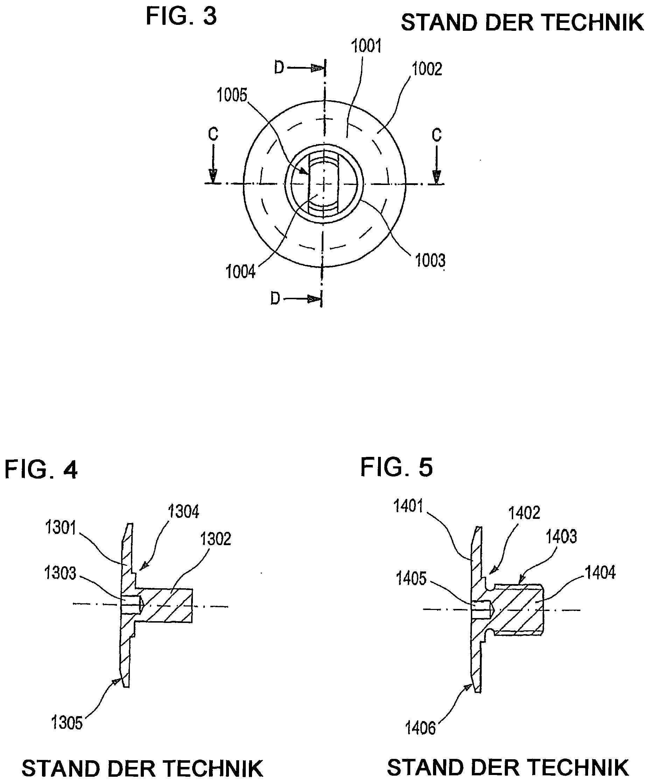

In die Reibahle nach Figur 1 wird eine Kühlmittelschraube nach Figur 3 bis 5 eingeschraubt, die als Verteiler dient. Figur 4 und 5 sind zwei senkrecht zueinander liegende Schnitte C-C (Figur 4) bzw. D-D (Figur 5) durch die Schraube nach Figur 3. Die Schraube nach Figur 3 umfasst einen Schraubenkopf 1001 mit einem abgeflachten Bereich 1002, einer Stufe 1003, einem Schraubenschaft 1004 und einem abgeflachten Bereich 1005. Wie aus den senkrecht zueinander liegenden Schnitten der Figuren 4 und 5 erkennbar, weist die Kühlmittelschraube nach dem Stand der Technik einen Schaft 1404 auf, der aus einem Gewinde 1403 besteht, das an zwei Seiten 1005, 1302, 1404 abgeflacht wurde. An den abgeflachten Seiten 1005 in Figur 3 kann Kühlmittel durch den axial verlaufenden Kühl-/Schmiermittelversorgungskanal strömen und wird am Verteilerkopf 1301, 1401 umgelenkt, um durch die Nuten 101, 503 (vgl. Figur 1 und 2) auf die Schneiden gelenkt zu werden. Schließlich umfasst die Kühlmittelschraube einen Schraubenantrieb 1303, 1405, der hier als ein Innensechskant ausgeführt ist, sowie einen abgeflachten Bereich 1305, 1406 am Rand der Kühlmittelschraube, um Raum für z. B. Späne zu schaffen.

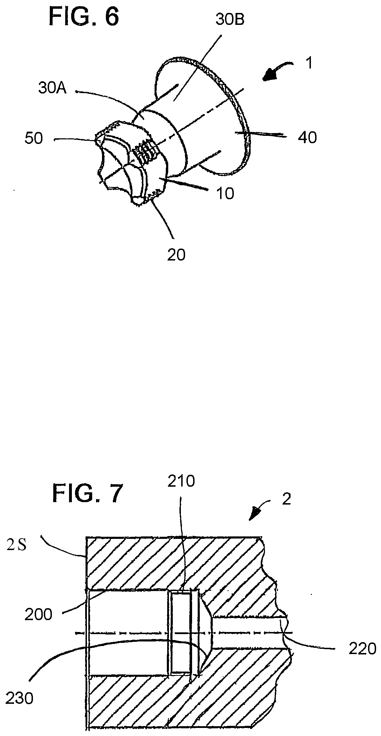

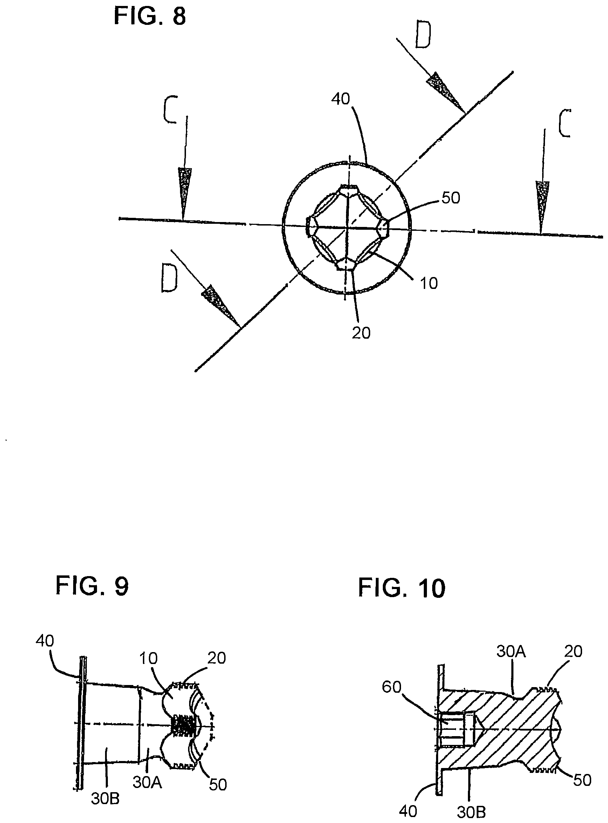

Figur 6 zeigt eine isometrische Ansicht einer Verteilerschraube 1. Im Vergleich zum Stand der Technik werden zum einen mehrere - in der Figur vier-Axialnuten 10 zwischen Gewindestegen 20 geschaffen, um bereits von Beginn an für eine bessere Verteilung des eingebrachten Kühlmittels zu sorgen. Die Axialnuten und Gewindestege werden nachstehend auch gemeinsam als "Gewinde" der Verteilerschraube bezeichnet. An das Gewinde der Verteilerschraube schließt sich der (hier zweiteilige) Schaft 30 mit den Abschnitten 30A, 30B an, der als Strömungsabschnitt dient. Dabei wird am Schaftabschnitt 30A zusammen mit dem Innengewinde im (in Fig. 7 gezeigten und nachstehend genauer erörterten) Zerspanungswerkzeug 2 ein größerer, halbtorusförmiger Raum geschaffen, in den das Kühlmittel durch die Axialnuten 10 strömt und in dem es sich durch die Ausdehnung entspannt. Anschließend strömt es weiter durch den Ringraum, der durch die Außenfläche des Schaftabschnitts 30B und das Innengewinde des Zerspanungswerkzeugs gebildet wird. Da der Durchmesser der Verteilerschraube 1 entlang der Außenfläche des Schaftabschnitts 30B in dieser Ausführungsform hin zum Verteilerkopf 40 größer wird, verjüngt bzw. verengt sich der Raum für das Kühlmittel zwischen der Verteilerschraube 1 und dem Zerspanungswerkzeug, so dass das Kühlmittel im Ringraum beschleunigt wird und sich gleichzeitig in Umfangsrichtung im Ringraum gleichmäßig verteilt. Dadurch wird das Kühlmittel so vorbereitet, dass es auf 360° am Umfang in alle Richtungen gleichmäßig austreten kann. Am Verteilerkopf wird das Kühlmittel umgelenkt und radial zur Seite des Zerspanungswerkzeugs und somit hin zu den Schneiden geführt. Auf der dem Verteilerkopf 40 gegenüberliegenden Seite weist die Verteilerschraube 1 einen Außenkonus 50 auf, der mit einem nachstehend an Hand von Figur 7 erläuterten Innenkonus 230 im Zerspanungswerkzeug 2 zusammenwirkt und in den Figuren 9 und 10 deutlicher erkennbar wird.

Figur 7 zeigt einen stirnseitigen Ausschnitt des Zerspanungswerkzeugs 2 nach der bevorzugten Ausführungsform der Erfindung, in das die Verteilerschraube 1 einschraubbar ist. Obwohl dies nicht im einzelnen gezeigt ist, umfasst auch das erfindungsgemäße Zerspanungswerkzeug 2 wie das Werkzeug nach dem Stand der Technik Schneiden analog den Schneiden 105. Alternativ kann die Erfindung auch auf ein Werkzeug mit geometrisch unbestimmten Schneiden wie ein Schleifwerkzeug angewendet werden. Bei einem derartigen Werkzeug ist eine möglichst gleichförmige Verteilung des Kühlmittels vergleichbar bedeutsam wie bei der als Beispiel gezeigten Reibahle.

Im Vergleich zum Zerspanungswerkzeug nach Figur 2, bei dem ein Gewinde 501 von der Stirnfläche aus eingeschnitten ist, verwendet das erfindungsgemäße Zerspanungswerkzeug 2 ein Innengewinde 210 nur auf einem vergleichsweise kurzen Stück einer Bohrung 200, in die die Verteilerschraube 1 einschraubbar ist. Die Bohrung 200 und das Innengewinde 210 fluchten mit einem zentrisch verlaufenden Kühl-/Schmiermittelversorgungskanal 220, aus dem das Kühlmittel eingeführt wird. An das Innengewinde 210 schließt sich in Richtung entgegen der Kühlmittelflussrichtung, also weg von der Stirnseite 2S des Zerspanungswerkzeugs 2, ein Innenkonus 230 an, der die Bohrung 200 mit dem Kühl-/Schmiermittelversorgungskanal 220 verbindet.

Die Verteilerschraube 1 wird in die Bohrung 200 des vorstehend erläuterten Zerspanungswerkzeugs 2 eingeführt und in den Gewindeabschnitt 210 eingeschraubt. Dabei stößt der vorderseitige Außenkonus 50 der Verteilerschraube 1 derart auf den Innenkonus 230, dass die Verteilerschraube beim Einschrauben an dieser Stelle festliegt. Der Austrittsspalt zwischen Verteilerkopf 40 und der schaftteilfernen Stirnfläche 2S des Zerspanungswerkzeugs 2, die einen Endabschnitt des Zerspanungswerkzeugs bildet, wird somit über die Differenz zwischen der Länge der Verteilerschraube 1 vom Au-ßenkonus 50 der Verteilerschraube 1 bis zum Verteilerkopf 40 und der Länge zwischen der Stirnfläche 2S des und dem Innenkonus 230 des Zerspanungswerkzeugs festgelegt. In einer bevorzugten Ausführungsform kann das Spaltmaß zwischen 0,4 mm und 0,6 mm liegen.

Die Schaftabschnitte 30A, 30B der Verteilerschraube 1 und die Bohrung 200 begrenzen im zusammengebauten Zustand den Ringraum, in dem sich das Kühlmittel gleichmäßig verteilt. Obwohl dies in der Ausführungsform nicht gezeigt ist, kann sich das Innengewinde 210 auch bis zur Stirnfläche 2S erstrecken; in diesem Fall wird jedoch die Montage durch die längeren Schraubvorgänge beim Einsetzen der Verteilerschraube 1 in das Zerspanungswerkzeug 2 etwas aufwändiger. Darüber hinaus kann sich das Kühlmittel entlang der glatten Bohrungswände der Bohrung 200 besser verteilen. Insbesondere bei Verwendung eines Aerosols als Minimalmengenschmiermittel bei einer sogenannten MMS-Schmierung könnte ein Gewinde, das länger als notwendig ist, zu einer unerwünschten Entmischung des Kühl-/Schmiermittels beitragen.

Im zusammengebauten Zustand, der hier nicht gezeigt wird, stößt die Außenkonusfläche 50 der Verteilerschraube 1 nach der Ausführungsform an die Innenkonusfläche 230 des Zerspanungswerkzeugs 2 an. Dadurch ergibt sich idealerweise eine Flächenberührung, mindestens jedoch eine Linienberührung zwischen der Verteilerschraube 1 und dem Zerspanungswerkzeug 2 an den Konusflächen. Aufgrund dieser Linienberührung, die im Wesentlichen senkrecht zur Mittelachse des Kühl-/Schmiermittelversorgungskanals verläuft, sitzt die Verteilerschraube 1 gerade in dem Zerspanungswerkzeug 2, während ein Verkanten der Verteilerschraube 1 ausgeschlossen wird. Dadurch wird der Austrittsspalt zwischen dem Verteilerkopf 40 und der Stirnfläche 2S des Zerspanungswerkzeugs 2 rundum gleich groß, so dass das Kühlmittel radial gleichmäßig in alle Richtungen verteilt wird. Alternativ kann in einer nicht erfindungsgemäßen Ausführungsform auch eine zusätzliche Führung des Kühlmittels durch Radialnuten entsprechend den Nuten 101 aus dem Stand der Technik erfolgen. In diesem Fall kann der Austrittsspalt im Vergleich zur bisher beschriebenen Ausführungsform verkleinert werden, oder die Verteilerschraube kann plan auf der Fläche zwischen den Nuten aufsitzen.

Es ist prinzipiell auch möglich, statt des Innen- oder Außenkonus auch eine ebene Fläche vorzusehen. In einem solchen Fall kann jedoch auf Grund von Fertigungstoleranzen ein Verkippen der Verteilerschraube 1 im Gewinde 210 auftreten, das dazu führen könnte, dass der Austrittsspalt nicht über seinen gesamten Umfang gleich groß bleibt. Auch andere Formen des Endes der Verteilerschraube 1 und des Übergangs zwischen der Bohrung 200 und dem Kühl-/Schmiermittelversorgungskanal 220 sind denkbar; beispielsweise könnte eine der Flächen halbkugelförmig, paraboloid- oder hyperboloidförmig sein. Wesentlich ist lediglich, dass möglichst ein Verkippen der Verteilerschraube 1 gegenüber dem Zerspanungswerkzeug 2 vermieden wird.

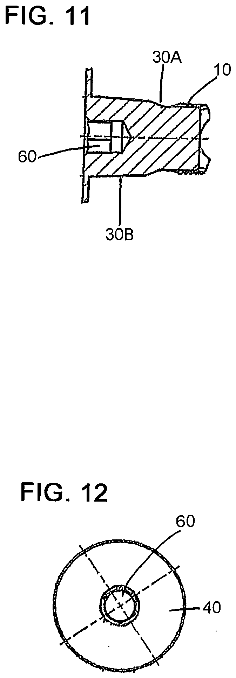

Figur 8 zeigt eine Draufsicht auf die Verteilerschraube nach der bevorzugten Ausführungsform der Erfindung, in der der in Figur 10 gezeigte Schnitt C-C sowie der in Figur 11 gezeigte Schnitt D-D eingezeichnet ist. Im eingebauten Zustand trifft das Kühlmittel in dieser Figur aus der Blickrichtung des Betrachters auf die Verteilerschraube 1, die über die Gewindestege 20 in dem Zerspanungswerkzeug 2 eingeschraubt ist, und geht über die Axialnuten 10 an den Gewindestegen 20 vorbei in den Ringraum. Wie in Figur 8 erkennbar sind die Axialnuten in diesem Beispiel leicht geschwungen; es können jedoch prinzipiell auch herkömmliche Abflachungen verwendet werden. Die hier gezeigte sanft geschwungene Form hat unter anderem den Vorteil, dass die Durchtrittsfläche für das Kühlmittel bei gleicher Größe des Gewindestegs größer wird, so dass die Kühlmittelzufuhr verbessert werden kann.

Wie zudem aus Figur 8 deutlich wird, weist der Verteilerkopf 40 einen deutlich größeren Durchmesser, beispielsweise ungefähr den 1,5 bis zweifachen Durchmesser der Bohrung 200 auf. Dadurch wird die Bohrung 200 vom Verteilerkopf 40 pilz- oder schirmförmig abgedeckt und das Kühlmittel kann an der Unterseite des Verteilerkopfs 40 entlang radial in Richtung zur Außenseite des Zerspanungswerkzeugs 2 umgeleitet werden, wo es aus dem zwischen dem Verteilerkopf 40 und der Stirnfläche 2S des Zerspanungswerkzeugs 2 gebildeten Austrittsspalt über dessen gesamten Umfang gleichmäßig austritt.

Figur 9 zeigt eine Seitenansicht der Verteilerschraube nach der bevorzugten Ausführungsform der Erfindung. Neben den bereits anhand der vorstehend beschriebenen Figuren erörterten Axialnuten 10, Gewindeabschnitten 20 und Außenkonen 50 ist in Figur 9 insbesondere der Strömungsabschnitt deutlich erkennbar. Wie aus Fig. 9 ersichtlich folgt auf den Gewindeabschnitt 20 mit den Axialnuten 10 in dieser Ausführungsform der Verteilerschraube 1 ein torisch eingeschnürter Schaftabschnitt 30A, der in einen sich kegelförmig aufweitenden Schaftabschnitt 30B übergeht. Wie bereits erläutert, ist erfindungswesentlich, dass im zusammengebauten Zustand ein Ringraum geschaffen wird, der es ermöglicht, dass sich das Kühlmittel gleichmäßig verteilt. Die hier gezeigte Ausführungsform ermöglicht es jedoch zusätzlich, dass das Kühlmittel sich in dem Raum zwischen der Bohrung 200 und dem Schaftabschnitt 30A entspannt, dass es sich dann beim Weiterströmen durch den sich verjüngenden Ringraum, der durch die Bohrung 200 und den Schaftabschnitt 30B gebildet wird, wieder beschleunigt und insbesondere auf diesem Weg die Möglichkeit hat, sich über den gesamten Umfang des Ringraums gleichmäßig zu verteilen. Anschließend trifft das Kühlmittel auf den Verteilerkopf 40 und wird in alle Richtungen gleichmäßig umgelenkt, um durch den Austrittsspalt zwischen der Stirnfläche 2S des Zerspanungswerkzeugs und der Unterseite des Verteilerkopfs 40 in alle Richtungen gleichmäßig auszutreten. Wie bereits erörtert ergibt die hier gezeigte in radialer Richtung ebene Stirnfläche 2S des Zerspanungswerkzeugs gemeinsam mit der ebenfalls ebenen Unterseite des Verteilerkopfs 40 einen Austrittsspalt, der weitgehend gleichförmig ist, so dass sich die Strömungsgeschwindigkeit des Kühlmittels nach der Umlenkung im Wesentlichen nicht mehr stark ändert. Obwohl dies nicht gezeigt ist, kann jedoch der Verteilerkopf 40 und die Stirnfläche 2S derart zusammenwirken, dass der Abstand zwischen Verteilerkopf 40 und Stirnfläche 2S nicht konstant bleibt, sondern sich hin zum Austrittsspalt entweder vergrößert oder verkleinert, wenn die Unterseite des Verteilerkopfs so gefertigt wird, dass sie nicht parallel zur Stirnfläche 2S ist. Im Ergebnis kann man dadurch die Strömung des Kühlmittels weiter optimieren, falls dies erforderlich ist, weil beispielsweise aus Platzgründen der Ringraum nicht ausreichend lang gefertigt werden kann. Zum Beispiel kann eine Verjüngung des Ringraums bis zur Umlenkung und eine anschließende Erweiterung bis zum Austrittsspalt zu einer Beschleunigung der Strömung eines Aerosols in der Art einer Lavaldüse führen. Selbst wenn die Unterseite des Verteilerkopfs nicht parallel zur Stirnfläche 2S ist, kann der Verteilerkopf die Stirnfläche beispielsweise pilz- oder schirmförmig überdecken.

Figur 10 zeigt einen Schnitt C-C durch die in Figur 8 gezeigte Verteilerschraube 1. Zusätzlich zu der bereits anhand von Figur 9 besprochenen Außenkontur kann in Figur 10 ein Schraubenantrieb in Form eines Innensechskants erkannt werden, der zum Einschrauben der Verteilerschraube 1 verwendbar ist. In ähnlicher Weise zeigt auch Figur 11 einen Schnitt D-D durch die in Figur 8 gezeigte Verteilerschraube in einem Winkel von 45° gegenüber dem Schnitt aus Figur 10. Aus Figur 10 und 11 kann zudem erkannt werden, dass an der Stirnseite der Verteilerschraube eine sphärische Mulde vorgesehen ist. Obwohl im Prinzip die Schraube auch glatt abschließen könnte, optimiert die Fertigung der sphärischen Fläche am Schraubenabschluss den Übertritt des Kühlmittels, das aus dem Kühl-/ Schmiermittelversorgungskanal 220 in die Axialnuten 10 eintritt. Dadurch wird der Strömungsgegendruck verringert und somit die nötige Kühlmittelförderleistung bei einer gegebenen Kühlmittelmenge kleiner.

Figur 12 zeigt eine Draufsicht auf den Schraubenantrieb der Verteilerschraube nach der bevorzugten Ausführungsform der Erfindung, in anderen Worten eine Draufsicht auf die Verteilerschraube von der Seite, die der Draufsicht aus Figur 8 gegenüberliegt. Wie bereits vorstehend erläutert, ist der Schraubenantrieb in der vorliegenden Ausführungsform ein Innensechskant. Alternativ kann jedoch jeder beliebige Schraubenantrieb wie ein Außensechskant, ein Schlitz-, Kreuzschlitz- oder ein Torxantrieb verwendet werden. Falls (hier nicht gezeigt) kein Gewinde vorgesehen ist, kann wie bereits erwähnt über einen Presssitz, Löten oder Kleben eine Verbindung zwischen Verteiler und Zerspanungswerkzeug 2 hergestellt werden, so lange ein Ringraum und ein Austrittsspalt wie vorstehend beschrieben geschaffen werden.

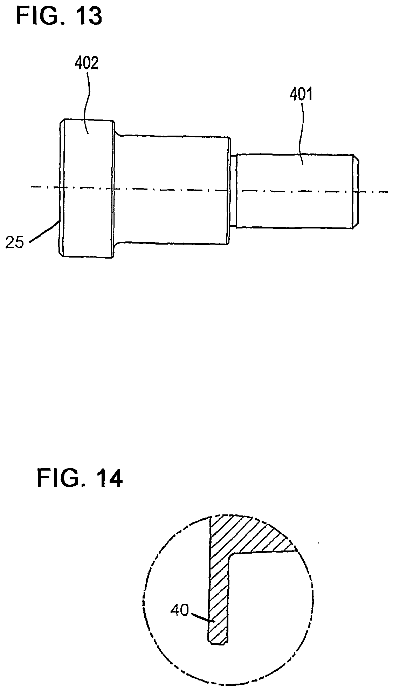

Figur 13 zeigt eine schematische Seitenansicht einer Reibahle als ein Beispiel für ein erfindungsgemäßes Zerspanungswerkzeug. Wie durch Vergleich mit dem geschnittenen Zerspanungswerkzeug aus Figur 2 nach dem Stand der Technik gut zu erkennen, sind in das erfindungsgemäße Zerspanungswerkzeug keine Nuten eingefräst, die das Kühlmittel verteilen. Stattdessen ist die Stirnfläche des Zerspanungswerkzeugs plan. In das Zerspanungswerkzeug wird eine Verteilerschraube wie vorstehend erläutert eingeschraubt, so dass Kühlmittel hin zur spanabtragenden Fläche 402 gefördert wird. Ähnlich wie beim Werkzeugschaft 104 aus dem in Hinblick auf Figur 1 erläuterten Stand der Technik dient der Werkzeugschaft 401 zum Einspannen des Zerspanungswerkzeugs.

Figur 14 zeigt ein Detail der in Figur 6 gezeigten Verteilerschraube. Genauer gesagt zeigt Figur 14 den Übergang zwischen dem Verteilerkopf 40 und dem Schaftabschnitt 30B der Verteilerschraube 1, der zusammen mit der Bohrung 220 den Ringraum bildet. Es ist zu beachten, dass der Übergang zwischen dem Schaftabschnitt 30B und dem Verteilerkopf 40 mit einem möglichst großen Radius ausgeführt werden sollte, um strömungstechnisch günstig zu sein. Andererseits ist jedoch klar, dass ein zu großer Radius zu Platzproblemen führen kann, da naturgemäß der Platz in der Bohrung 220 beschränkt ist, in die der Radius passen muss.

Zusammenfassend leistet die Erfindung Folgendes:
Es wird ein Zerspanungswerkzeug 2 mit einer Verteilerschraube 1 geschaffen, das einen Ringraum zwischen einem Schaft 30 der Verteilerschraube 1 und einer Bohrung 220 bilden, in die die Verteilerschraube 1 eingeführt wird. In dem Ringraum wird aus einem zentralen Kühl-/Schmiermittelversorgungskanal über Axialnuten 10 zugeführtes Kühl-/Schmiermittel gleichförmig verteilt, um an einem Verteilerkopf 40 der Verteilerschraube 1 radial in alle Richtungen, also über 360°, umgeleitet und gleichförmig in Richtung der Zerspanungsschneiden oder -flächen abgegeben zu werden.

### Bezugszeichenliste:

- 1: Verteilerschraube
- 2: Zerspanungswerkzeug
- 2S: Stirnfläche des Zerspanungswerkzeugs
- 10: Axialnut
- 20: Gewindesteg
- 30: Schaft
- 30A, 30B: Schaftabschnitte
- 40: Verteilerkopf
- 50: Außenkonus
- 60: Schraubenantrieb
- 101: Nut (Stand der Technik)
- 102: Freifläche (Stand der Technik)
- 103, 104: Schaftabschnitte (Stand der Technik)
- 105: Schneide (Stand der Technik)
- 200: Bohrung
- 210: Gewindeabschnitt
- 220: Kühlmittelversorgungskanal
- 230: Innenkonus
- 401: Werkzeugschaft
- 402: Zerspanungsfläche
- 501: Kühlkanal mit großem Durchmesser (SdT)
- 502: Kühl-/Schmiermittelversorgungskanal
- 503: Nut (Stand der Technik)
- 1001: Schraubenkopf (Stand der Technik)
- 1002, 1005: abgeflachter Bereich des Schraubenkopfs
- 1003: Stufe (Stand der Technik)
- 1004: Schraubenschaft (Stand der Technik)
- 1301, 1401: Verteilerkopf (Stand der Technik)
- 1302, 1404, 1305, 1406: abgeflachter Bereich des Schraubenkopfs
- 1303, 1405: Schraubenantrieb (Stand der Technik)
- 1403: Gewinde (Stand der Technik)
- 1404: Schraubenschaft (Stand der Technik)

## Patentansprüche

1. Drehantreibbares Zerspanungswerkzeug (2) mit einem Schaftteil, einem Schneidteil mit einer Vielzahl von Schneiden, einem zumindest in dem schaftteilfernen Endabschnitt des Schneidteils entlang der Drehachse zentrisch verlaufenden Kühl- und/oder Schmiermittelversorgungskanal (200, 220, 230), der an der schaftteilfernen Stirnseite (2S) des Schneidteils austritt, und einer Verteilerschraube (1) mit einem in den Kühl- und/oder Schmiermittelversorgungskanal (200, 220, 230) eingeschraubten Gewindeschaft, der eine Vielzahl von in Umfangsrichtung durch Axialnuten (10) voneinander beabstandete Gewindestege (20) aufweist, und einem Kopf (40), der das über den Kühl-/ Schmiermittelversorgungskanal (200, 220, 230) und die Axialnuten (10) axial zuströmende Kühl- und/oder Schmiermittel radial in Richtung der Schneiden umlenkt, wobei die Verteilerschraube (1) in Strömungsrichtung des Kühl- und/oder Schmiermittels im Bereich zwischen den Gewindestegen (20) und dem Kopf (40) einen Strömungsabschnitt mit einem im Durchmesser verringerten Querschnitt aufweist, der mit einer Gewindebohrung (200) im Schneidteil einen sich axial erstreckenden Ringraum rund um den Strömungsabschnitt bildet,
**dadurch gekennzeichnet, dass**
sich in dem axial erstreckenden Ringraum das Kühl-/ Schmiermittel verteilt und gleichmäßig auf alle Seiten des Zerspanungswerkzeugs (2) abfließt, wobei der Ringraum zylindrisch ausgebildet ist, so dass über 360° am gesamten Umfang des Zerspanungswerkzeugs (2) ausreichend Kühl-/Schmiermittel zur Verfügung steht, und die Stirnseite (2S) nutfrei ausgebildet ist, so dass Schmiermittel durch einen Spalt zwischen der Verteilerschraube (1) und der Stirnseite (2S) des Zerspanungswerkzeugs (2) austreten kann.

2. Drehantreibbares Zerspanungswerkzeug (2) nach Anspruch 1, **wobei** der Ringraum sich in Strömungsrichtung des Kühl-/Schmiermittels verjüngt.

3. Drehantreibbares Zerspanungswerkzeug (2) nach Anspruch 2, **wobei** sich der Ringraum in einem Winkel von 1° bis 5°, vorzugsweise 3°, gegen die Axialrichtung in Strömungsrichtung verjüngt.

4. Drehantreibbares Zerspanungswerkzeug (2) nach einem der vorhergehenden Ansprüche, **wobei** die Verteilerschraube (1) derart im Kühl-/Schmiermittelversorgungskanal (200, 220, 230) befestigt ist, dass der Kopf der Verteilerschraube einen vorab festgelegten Abstand vom stirnseitigen Ende des Kühl-/ Schmiermittelversorgungskanals (200, 220, 230) aufweist.

5. Drehantreibbares Zerspanungswerkzeug (2) nach einem der vorhergehenden Ansprüche, **wobei** die Verteilerschraube (1) auf der kopffernen Seite einen Außenkonus (50) aufweist, der sich zur Zentrierung und Festlegung der axialen Lage der Verteilerschraube (1) relativ zum Schneidteil des Zerspanungswerkzeugs (2) an einem in Strömungsrichtung vor dem Gewindeabschnitt (210) ausgebildeten Innenkonus (230) abstützt.

6. Drehantreibbares Zerspanungswerkzeug (2) nach einem der vorhergehenden Ansprüche, **wobei** die Strömungsfläche an der Rückseite des Verteilerkopfs (40) der Verteilerschraube (1) in einem definierten axialen Abstand zur Stirnseite (2S) des Schneidteils liegt.

7. Drehantreibbares Zerspanungswerkzeug (2) nach einem der vorhergehenden Ansprüche, **wobei** der Verteilerkopf (40) der Verteilerschraube (1) auf seiner im eingebauten Zustand zum Kühl-/Schmiermittelversorgungskanal (200, 220, 230) zeigenden Seite eben ist.

8. Drehantreibbares Zerspanungswerkzeug nach einem der vorhergehenden Ansprüche, **wobei** die dem Verteilerkopf (40) der Verteilerschraube (1) im eingebauten Zustand gegenüberliegende Fläche des Schneidteils eben ist.

9. Drehantreibbares Zerspanungswerkzeug (2) nach einem der Ansprüche 1 bis 5, **wobei** mindestens entweder der Verteilerkopf (40) der Verteilerschraube (1) oder die dem Verteilerkopf (40) der Verteilerschraube (1) im eingebauten Zustand gegenüberliegende Fläche des Schneidteils mindestens eine Kühl-/ Schmiermittelversorgungsnut (101) umfasst.

10. Drehantreibbares Zerspanungswerkzeug (2) nach einem der vorhergehenden Ansprüche, **wobei** der Verteilerkopf (40) einen Schraubenantrieb (60), insbesondere einen Innen- oder Außensechskant, aufweist.

## Claims

1. Rotary-drivable metal-cutting tool (2) having a shank part, a cutting part with a plurality of cutting edges, a coolant and/or lubricant supply duct (200, 220, 230) passing centrally along the rotary axis at least in the end section of the cutting part distant from the shank part, said duct exiting at the front face (2S) of the cutting part distant from the shank part and a distributor screw (1) with a threaded shank screwed into the coolant and/or lubricant supply duct (200, 220, 230) and having a plurality of thread ridges (20) separated from one another in the circumferential direction by axial grooves (10), and a head (40) which radially diverts in the direction of the cutting edges the coolant and/or lubricant axially inflowing via the coolant/lubricant supply duct (200, 220, 230) and the axial grooves (10), **wherein** the distributor screw (1) has, in the flow direction of the coolant and/or lubricant in the area between the thread ridges (20) and the head (40), a flow section with a cross-section of reduced diameter that forms with a threaded hole (200) in the cutting part an axially extending annulus around the flow section,
**characterized in that**
in the axially extending annulus, the coolant/lubricant flows out distributed and evenly to all sides of the metal-cutting tool (2), wherein the annulus is designed cylindrical such that sufficient coolant/lubricant is available over 360° at the entire circumference of the metal-cutting tool (2), and the front face (2S) is designed groove-free such that lubricant can exit through a gap between the distributor screw (1) and the front face (2S) of the metal-cutting tool (2).

2. Rotary-drivable metal-cutting tool (2) according to claim 1, **wherein** the annulus tapers in the flow direction of the coolant/lubricant.

3. Rotary-drivable metal-cutting tool (2) according to claim 2, **wherein** the annulus tapers in the flow direction at an angle of 1° to 5°, preferably 3°, against the axial direction.

4. Rotary-drivable metal-cutting tool (2) according to one of the preceding claims, **wherein** the distributor screw (1) is fastened in the coolant/lubricant supply duct (200, 220, 230) such that the head of the distributor screw has a predetermined distance from the front end of the coolant/lubricant supply duct (200, 220, 230).

5. Rotary-drivable metal-cutting tool (2) according to one of the preceding claims, **wherein** the distributor screw (1) has on the side distant from the head an outer cone (50) which abuts on an inner cone (230) formed in the flow direction before the threaded section (210), in order to centre and fix the axial position of the distributor screw (1) relative to the cutting part of the metal-cutting tool (2).

6. Rotary-drivable metal-cutting tool (2) according to one of the preceding claims, **wherein** the flow surface on the rear of the distributor head (40) of the distributor screw (1) is at a defined axial distance from the front face (2S) of the cutting part.

7. Rotary-drivable metal-cutting tool (2) according to one of the preceding claims, **wherein** the distributor head (40) of the distributor screw (1) is flat on its side facing the coolant/lubricant supply duct (200, 220, 230) in the installed state.

8. Rotary-drivable metal-cutting tool according to one of the preceding claims, **wherein** the surface of the cutting part opposite to the distributor head (40) of the distributor screw (1) in the installed state is flat.

9. Rotary-drivable metal-cutting tool (2) according to one of claims 1 to 5, **wherein** at least either the distributor head (40) of the distributor screw (1) or the surface of the cutting part opposite to the distributor head (40) of the distributor screw (1) in the installed state comprises at least one coolant/lubricant supply groove (101).

10. Rotary-drivable metal-cutting tool (2) according to one of the preceding claims, **wherein** the distributor head (40) has a screw drive (60), in particular a hexagon socket or hexagon head.

## Revendications

1. Outil à enlèvement de copeaux (2) entraîné en rotation avec une tige, un élément de coupe avec une pluralité de tranchants, un conduit d'alimentation en liquide de refroidissement et/ou lubrifiant (200, 220, 230) s'étendant au centre le long de l'axe de rotation au moins dans la section d'extrémité de l'élément de coupe, éloignée de la tige, qui sort du côté frontal (2S) de l'élément de coupe, éloigné de la tige, et une vis distributrice (1) avec une tige filetée vissée dans le conduit d'alimentation en liquide de refroidissement et/ou lubrifiant (200, 220, 230), laquelle présente une pluralité de parties filetées (20) éloignées les unes des autres dans le sens circonférentiel par des rainures axiales (10), et une tête (40) qui dévie radialement en direction des tranchants les liquides de refroidissement et/ou lubrifiants arrivant axialement par le biais du conduit d'alimentation en liquide de refroidissement et/ou lubrifiants (200, 220, 230) et des rainures axiales (10), **sachant** que la vis distributrice (1) présente un segment à écoulement avec une section au diamètre réduit dans le sens d'écoulement du liquide de refroidissement et/ou du lubrifiant dans la zone située entre les parties filetées (20) et la tête (40), lequel segment d'écoulement forme, avec un alésage fileté (200) dans l'élément de coupe un espace annulaire s'étendant axialement autour du segment à écoulement,
**caractérisé en ce**
**que** dans l'espace annulaire s'étendant axialement, le liquide de refroidissement et/ou lubrifiant s'écoule de manière répartie et uniforme sur tous les côtés de l'outil à enlèvement de copeaux (2), sachant que l'espace annulaire est conçu de forme cylindrique de manière à ce que suffisamment de liquide de refroidissement et/ou de lubrifiant soit disponible sur 360° sur toute la circonférence de l'outil à enlèvement de copeaux (2) et que le côté frontal (2S) soit conçu sans rainure de manière à ce que le lubrifiant puisse sortir à travers une fente située entre la vis distributrice (1) et le côté frontal (2S) de l'outil à enlèvement de copeaux (2).

2. Outil à enlèvement de copeaux (2) entraîné en rotation selon la revendication 1, **sachant que** l'espace annulaire se rétrécie dans le sens d'écoulement du liquide de refroidissement/lubrifiant.

3. Outil à enlèvement de copeaux (2) entraîné en rotation selon la revendication 2, **sachant que** l'espace annulaire se rétrécie dans un angle de 1° à 5°, de préférence de 3°, par rapport au sens axial, dans le sens d'écoulement.

4. Outil à enlèvement de copeaux (2) entraîné en rotation selon une des revendications précédentes, **sachant que** la vis distributrice (1) est fixée dans le conduit d'alimentation en liquide de refroidissement et/ou lubrifiant (200, 220, 230) de sorte que la tête de la vis distributrice présente un écart préalablement fixé, par rapport à l'extrémité côté frontal du conduit d'alimentation en liquide de refroidissement et/ou lubrifiant (200, 220, 230).

5. Outil à enlèvement de copeaux (2) entraîné en rotation selon une des revendications précédentes, **sachant que** la vis distributrice (1) présente sur le côté éloigné de la tête un cône extérieur (50) qui s'appuie sur un cône intérieur (230) constitué en amont de la section filetée (210) dans le sens d'écoulement pour centrer et fixer la position axiale de la vis distributrice (1) par rapport à l'élément de coupe de l'outil à enlèvement de copeaux (2).

6. Outil à enlèvement de copeaux (2) entraîné en rotation selon une des revendications précédentes, **sachant que** la surface d'écoulement au dos de la tête distributrice (40) de la vis distributrice (1) se situe à une distance axiale définie par rapport au côté frontal (2S) de l'élément de coupe.

7. Outil à enlèvement de copeaux (2) entraîné en rotation selon une des revendications précédentes, **sachant que** la tête distributrice(40) de la vis distributrice (1) est plane sur son côté pointant à l'état monté vers le conduit d'alimentation en liquide de refroidissement et/ou lubrifiant (200, 220, 230).

8. Outil à enlèvement de copeaux entraîné en rotation selon une des revendications précédentes, **sachant que** la surface de l'élément de coupe opposée à la tête distributrice (40) de la vis distributrice (1) à l'état monté est plane.

9. Outil à enlèvement de copeaux (2) entraîné en rotation selon une des revendications 1 à 5, **sachant qu'**au moins soit la tête distributrice (40) de la vis distributrice (1) soit la surface de l'élément de coupe opposée à la tête distributrice (40) de la vis distributrice (1) à l'état monté comprend au moins une rainure d'alimentation en liquide de refroidissement/lubrifiant (101).

10. Outil à enlèvement de copeaux (2) entraîné en rotation selon une des revendications précédentes, **sachant que** la tête distributrice (40) présente un actionneur à vis (60), notamment à six pans creux ou à tête hexagonale.
